# EUROPÄISCHE PATENTSCHRIFT

(11) **EP 2 444 828 B1**
(45) Veröffentlichungstag und Bekanntmachung des Hinweises auf die Patenterteilung: **08.06.2016**
(21) Anmeldenummer: 11405338.2
(22) Anmeldetag: 18.10.2011
(51) Int. Cl.: H01R 13/639, H01R 24/64, G02B 6/38

(54) **Steckverbinder und Sicherheitssystem für Steckverbinder**
Connector and safety system for connectors
Connecteur à fiche et système de sécurité pour connecteurs à fiche

(30) Priorität: 19.10.2010 CH 17082010
(43) Veröffentlichungstag der Anmeldung: 25.04.2012
(73) Patentinhaber: Reichle & De-Massari AG, 8622 Wetzikon (CH)
(72) Erfinder: Wüst, Theodor, 8630 Rüti ZH (CH)
(74) Vertreter: Daub, Thomas

(56) Entgegenhaltungen:
- EP-A1- 1 371 114
- EP-A2- 1 653 570
- DE-U1-202010 002 819
- US-A1- 2002 098 731
- US-A1- 2007 207 667

## Beschreibung

Die Erfindung betrifft das Gebiet der Steckverbinder und insbesondere Sicherheitssysteme für Steckverbindungen von elektrischen oder optischen Datenleitungen.

An die Packungsdichte von Steckverbindungen in Steckverbindungspanels werden zunehmend grössere Anforderungen gestellt. Die Steckverbinder selbst haben normierte Grössen. Für elektrische Datenleitungen ist der RJ45-Steckverbinder nach wie vor weit verbreitet; alternativ gibt es auch das leistungsfähigeren GG45-Stecksystem und andere. Bei optischen Steckverbindern ist bspw. der LC-Steckverbinder verbreitet. Weil die Steckverbinder und ihre Bemessungen normiert sind, kann eine höhere Packungsdichte nur dadurch erwirkt werden, dass die Steckverbindungen immer näher beieinander angeordnet werden. Bei allzu dichter Packung wird ein manuelles Ziehen eines Steckers jedoch zunehmend schwierig.

Ein weiteres, besonderes Problem ergibt sich in Bezug auf Sicherungssysteme. Mit solchen wird je nach Sicherheitsanforderung verhindert, dass falsche Verbindungen erstellt werden und/oder dass eine Verbindung durch nicht autorisierte Personen gelöst werden kann.

Beispiele für ein solches Sicherungssystem findet man in der EP 1 371 114 für elektrische Steckverbinder und in der EP 1 577 986 für optische Steckverbinder. Diesen beiden Systemen ist gemeinsam, dass eine Sicherungsvorrichtung vor der Steckerbuchse befestigt wird. Die Verriegelung erfolgt gemäss EP 1 371 114 durch die Rastklinke des RJ45-Steckers, welche durch die Sicherungsvorrichtung unzugänglich gemacht wird. Gemäss EP 1 577 986 erfolgt die Verriegelung durch ein Rastmittel der Sicherungsvorrichtung. In beiden Fällen wird durch ein Werkzeug entriegelt, welches seitlich durch ein Schlüsselloch eingeführt wird und mit einer Drehbewegung das entsprechende Rastmittel anhebt. Aufgrund der seitlichen Einführung eines Werkzeugs sind diese Systeme jedoch für eine dichte Packung nicht geeignet.

Die DE 20 2010 002 819 zeigt ebenfalls eine vor der Buchse zu befestigende Sicherungsvorrichtung. Diese weist einen Vorsprung auf, welcher eine Tasche bildet, in dem die Rastklinke des in die Buchse eingesteckten Steckers verschwindet. Die Rastverbindung zwischen Stecker und Buchse kann durch Einführen eines Werkzeugs von schräg unten in die Tasche gelöst werden, wobei ein Betätigungsvorsprung des Werkzeugs durch eine kleine unterseitige Öffnung in die Tasche eingreifen und die Rastklinke betätigen kann. Diese Lösung ist für dichte Anordnungen von Buchsen mit eingesteckten Steckern ungeeignet, weil durch das Schräge betägigen Platz unter jeder Buchse benötigt wird und ausserdem bei eingesteckten benachbarten Steckern für die Führung des Werkzeugs erhebliches Fingerspitzengefühl gefordert ist.

In der EP 1 762 871 und der WO 2010/03130 wird je eine Sicherungsvorrichtung vorgestellt, welche am Stecker selbst befestigt wird, nämlich an einem Duplex-Stecker eines optischen Steckverbinders. Auch die US 2007/0207667 zeigt eine Sicherungsvorrichtung für RJ45-Steckverbinder, die am Stecker selbst befestigt wird. Die Sicherungsvorrichtung weist ein den Stecker bereichsweise umgebendes Gehäuse und ein mit der Rastklinke des Steckers zusammenwirkendes federndes Rückhalteglied auf. Dadurch, dass konstruktionsgemäss sowohl die Rastklinke als auch das Rückhalteglied im Innern des am Stecker befestigten Gehäuses gehalten werden muss, ergibt sich ein ziemlich grosser Querschnitt des Steckers. Für Patch-Kabel-Anordnungen mit einer hohen Steckerdichte ist diese Konstruktion daher nicht geeignet.

Andere Systeme gemäss dem Stand der Technik weisen am Stecker bewegbar befestigte Elemente auf, die ein Betätigen einer Rastklinke je nach Platzierung verhindern, ermöglichen oder auslösen. Solche Systeme genügen im Allgemeinen höheren Sicherheitsanforderungen nicht, weil sie eine werkzeugsfreie Entriegelung ermöglichen.

So, zeigt US 2007/207667 A1 ein Steckverbinungssystem gemäß dem Oberbegriff des Anspruchs 1.

Es ist demnach eine Aufgabe der Erfindung, ein Steckverbindungssystem für Datenleitungen nach Anspruch 1 auszubilden, so dass die Steckverbindung zuverlässig gegen unbeabsichtigtes und/oder unautorisiertes Trennen einer Steckverbindung geschützt ist und dabei wenig Platz benötigt.

Eine erfindungsgemässe Sicherungsvorrichtung ist für ein im Allgemeinen normiertes elektrisches oder optisches Steckverbindungssystem mit einem Steckerteil und einer Steckbuchse vorgesehen. Die Steckbuchse bildet eine Steckeröffnung, in welche das Steckerteil so einführbar ist, dass ein federndes Rastmittel (insbesondere des Steckerteils) das Steckerteil gegen ein Herausziehen aus der Steckeröffnung verriegelt/verrastet. Die Sicherungsvorrichtung ist vor der Steckbuchse (und also direkt oder indirekt - z.B. über ein Panel, Modul etc. - an dieser; ortsfest relativ zu dieser und somit nicht am Stecker) befestigbar und so ausgeführt, dass sie das federnde Rastmittel für eine manuelle Betätigung unzugänglich macht (d.h. das Rastmittel ist so unzugänglich angeordnet, dass eine erwachsene Person es nicht mit blossen Fingern betätigen kann; bevorzugt ist der aus der Buchse herausragende Teil des Rastmittels ganz von einer durch die Sicherungsvorrichtung gebildeten Gehäuse umgeben). Die Sicherungsvorrichtung zeichnet sich dadurch aus, dass ein Entriegelungswerkzeug durch eine axiale Bewegung - d.h. eine Bewegung mit einer wesentlichen Komponente in Richtung der Steckerachse - in die Sicherungsvorrichtung einführbar ist, derart, dass durch diese axiale Bewegung das Rastmittel des Steckerteils entriegelt wird.

Das Steckverbindungssystem kann bspw. ein System der RJ-Familie oder ein optisches Steckverbindungssystem, z.B. vom Typ LC sein.

Mit 'Steckbuchse' wird hier generell der äussere Teil einer Steckverbindung bezeichnet, in den ein innerer Teil (Stecker/Steckerteil) geschoben wird. Die Steckbuchse kann auch Teil eines Adapterteils oder eines Kupplungsteils sein, welch letzteres den Zweck hat, zwei Stecker (beispielsweise für die optische Datenübertragung) miteinander zu kuppeln, die beidseitig je in eine Steckbuchse des Kupplungsteils geschoben zu werden. Besonders vorteilhaft ist die Erfindung jedoch in Bezug auf Steckbuchsen, die an einem Steckpanel (oder Steckpaneel) ausgebildet sind, wie sie beispielsweise in einer Schaltzentrale, einem Serverraum, einem Netzwerkverkabelungs-Knoten etc. verwendet werden und bei dem viele Steckbuchsen aus Platzgründen möglichst nahe beieinander angeordnet sind.

Dadurch, dass die Entriegelungsöffnung(en) für eine axiale Bewegung der entriegelnden Partie des Entriegelungswerkzeugs ausgebildet ist/sind, muss für das lösen der Rastverbindung kein Werkzeug von der Seite bzw. von oben oder unten her in die Sicherungsvorrichtung einführbar sein. Das ermöglicht eine im Vergleich zu bestehenden Lösungen höhere Packungsdichte der Steckbuchsen unter Beibehaltung der Sicherheitsmerkmale, bspw. bei Panels, Modulen und dergleichen.

Gemäss einer besonderen Ausgestaltung der Erfindung weist die Sicherungsvorrichtung weiter ein Betätigungselement auf, welches relativ zu einem Sicherungsvorrichtungsgehäuse bewegbar gelagert und für die manuelle Betätigung unzugänglich ist, wenn die Sicherungsvorrichtung an der Steckbuchse befestigt ist. Das Betätigungselement ist durch Einführen des Entriegelungswerkzeugs in die Sicherungsvorrichtung relativ zum Sicherungsvorrichtungsgehäuse verschiebbar und so ausgebildet, dass es bei eingeführtem Steckerteil durch diese Verschiebung das federnde Rastmittel betätigt

Ein solches Betätigungselement ist bspw. vollständig im Innern eines Innenraums vorhanden, welcher durch ein Sicherungsvorrichtungsgehäuse, eventuell zusammen mit dem Panel und/oder der Steckbuchse gebildet wird.

Oft wird ein Rastmittel durch eine Bewegung in radialer Richtung betätigt - bspw. ein Auslenken einer Rastklinke zur Steckerachse hin. In solchen Situationen kann das Betätigungselement beispielsweise so angeordnet und/oder geführt sein, dass eine axiale Bewegung des Entriegelungswerkzeugs in eine Bewegung des Betätigungselements mit relativer radialer Komponente umgelenkt wird. Durch diese Bewegung mit radialer Komponente kann dann das Rastmittel betätigt werden.

Das Betätigungselement kann als Stift ausgebildet sein, der auf zwei Seiten durch eine Nut kulissenartig geführt wird. Die Nut kann eine rein radiale Bewegung des Betätigungselements oder eine Bewegung definieren, die eine radiale Komponente (z.B. gegen "unten"/zur Steckerachse hin) und eventuell auch eine axiale Komponente aufweist (also z.B. "schräg nach unten"). Der Entriegelungsfortsatz des Entriegelungswerkzeugs kann dann als distale Endfläche eine Rampe aufweisen, d.h. die distale Endfläche kann nicht-senkrecht auf die Steckerachse ausgebildet sein. Durch das Zusammenspiel der Führung des Betätigungselements mit dem Ansetzen der Rampe am Betätigungselement wird beim Einschieben des Entriegelungsfortsatzes das Betätigungselement relativ zum Stecker und zum Sicherungsvorrichtungsgehäuse radial verschoben.

Allgemein ausgedrückt kann eine axiale Bewegung des Entriegelungsfortsatzes in eine Bewegung des Betätigungselements mit radialer Komponente umgesetzt werden, wenn die distale Endfläche des Entriegelungsfortsatzes in einem von 90° verschiedenen Winkel zu der vorgegebenen Bewegungsrichtung steht. Durch die (auch) radiale Bewegung des Betätigungselements kann dann die notwendige, in vielen Fällen radiale Bewegung des Rastelements zur Steckerachse hin bewirkt werden. Die Bewegungsrichtung kann durch eine Nut und/oder Kulissenführung oder bspw. auch eine Drehachse vorgegeben sein.

Die Richtungsangaben "axial", "radial" etc. sind hier immer in Bezug auf den Stecker und auf eine gedachte Steckerachse zu verstehen. Die in diesem Text verwendeten Lagebezeichnungen 'proximal' und ,distal' sind entsprechend in Bezug auf eine Steckrichtung zu verstehen, d.h. 'distal' bedeutet in die Buchse hinein bzw. ,vorne am Stecker', ,proximal' entsprechend aussen an der Buchse bzw. 'hinten am Stecker'. 'posterior', 'anterior' und ,lateral' bezeichnen in Bezug auf die Steckerachse radiale Richtungen; wenn ein Rastmittel (bspw. Rastklinke) am Stecker selbst vorhanden ist, ist dieses ,posterior'; bei RJ45- Steckverbindern ist 'anterior' die Seite mit den Kontakten.

Zum Einführen des Entriegelungswerkzeugs existiert mindestens eine Enriegelungsöffnung an oder in der Sicherungsvorrichtung, durch welche ein Entriegelungsfortsatz des Entriegelungswerkzeugs am Steckerteil vorbei ins Innere der Sicherungsvorrichtung und eventuell auch in die Steckbuchse hinein einführbar ist. In einer Ausführungsform sind zwei Entriegelungsöffnungen vorhanden, die beispielsweise symmetrisch angeordnet sind und in welche zwei Entriegelungsfortsätze des Entriegelungswerkzeugs einführbar sind. Die Sicherungsvorrichtung kann - beispielsweise gegebenenfalls durch Ausgestaltung und Anordnung des Betätigungselements - so ausgebildet sein, dass die Betätigung des Rastmittels nur erfolgt, wenn durch beide Entriegelungsöffnungen gleichzeitig ein passendes Element (Entriegelungsfortsatz) eingeführt wird. Das erhöht die Sicherheit, da verhindert wird, dass eine Betätigung durch ein nicht zu diesem Zweck vorgesehenes Werkzeug - beispielsweise einen dicken Draht oder einen Schraubendreher - erfolgt. Wenn das Betätigungselement ein Betätigungsstift ist, kann beispielsweise die Führung des Stifts so sein, dass das Rastmittel nicht genügend ausgelenkt wird, wenn der Stift mit seinem einem Ende am dem einen (bspw. oberen) Anschlag und mit seinem anderen Ende am anderen (bspw. unteren) Anschlag ist.

Wenn das Rastmittel an einer Seite des Steckers vorhanden ist - beispielsweise "oberseitig"/"hinterseitig" (posterior) bei einem RJ45- oder GG45-Stecker -, können die Entriegelungsöffnungen beidseitig lateral des Rastmittels angeordnet sein.

Die Verriegelungsvorrichtung kann eine Tasche bilden, in der bei eingeschobenem Steckerteil das Rastmittel, bspw. die Rastklinke, gelagert wird. Wenn das Rastmittel eine Rastklinke ist, kann diese durch eine Abdeckung abgeschirmt sein und also völlig im Innern der Sicherungsvorrichtung und in der Tasche derselben verschwinden. Nebst einer solchen Abdeckung kann die Tasche optional auch seitliche(laterale) Wände aufweisen.

Die Verriegelungsvorrichtung kann die Buchsenöffnung umgeben und mindestens bereichsweise kragenartig von dieser vorstehen, wobei die Tiefe des Kragens (die Ausdehnung in Richtung der Steckerachse) mindestens so gross sein kann wie die Ausdehnung des ohne Verriegelungsvorrichtung aus der Steckbuchse herausragenden Teils des Rastmittels. Am Kragen kann eine zum Steckerteil hin offene Tasche der vorstehend erwähnten Art für den proximalen (steckerseitigen) Endbereich des Rastmittels sein. In diesem Fall kann das Betätigungselement distal von der Tasche gelagert sein, und die Entriegelungsöffnungen können beidseitig von der Tasche liegen. Sie können durch Ausbuchtungen des Bereichs gebildet sein, die zum Einführen des Steckerteils vorgesehen sind.

Die mindestens eine Entriegelungsöffnung kann eine mechanische Codierung aufweisen, bspw. mindestens einen kammartigen Vorsprung, eine Nut und/oder andere von einer einfachen, rechteckigen oder runden Grundform abweichende geometrische Elemente. Das Entriegelungswerkzeug wird dann eine entsprechende komplementäre Struktur aufweisen.

Das Entriegelungswerkzeug kann das Steckerteil teilweise umgreifend ausgeformt sein. Es kann eine auf die Form des Steckerteils abgestimmte Führungspartie aufweisen, welche die axiale Position des Entriegelungswerkzeugs relativ zum Steckerteil definiert und so beispielsweise verhindern kann, dass das Entriegelungswerkzeug zu weit oder mit zu viel Wucht in die Sicherungsvorrichtung eingeführt werden kann.

Die Sicherungsvorrichtung ist an der jeweiligen Buchse selbst oder am die Buchse aufnehmenden Steckpanel befestigt/befestigbar. Zur Befestigung am Panel können die Stecköffnungen des Panels für die Steckbuchsen Ausbuchtungen für Rastlaschen haben. Anstatt der bekannten, um die Stecköffnung herum gruppierten separaten Löcher (Aufnahmevorrichtungen) wird dann die Stecköffnung selbst Rastlaschen aufnehmen, mit denen die Sicherungsvorrichtung aufgeclippt wird - was sich ebenfalls Platz sparend auswirkt. Solche Rastlaschen können beispielsweise Rastnasen aufweisen, welche Platz sparend nach innen ragen.

Ein Sicherungssystem wird nebst mindestens einer Sicherungsvorrichtung der beschriebenen Art auch mindestens ein passendes Entriegelungswerkzeug aufweisen. Dieses weist einen Entriegelungsfortsatz auf, welcher durch eine Bewegung in axialdistaler Richtung in eine Entriegelungsöffnung der Sicherungsvorrichtung einführbar ist und welche vorzugsweise in ihrem Querschnitt an einen Querschnitt der Entriegelungsöffnung angepasst ist. In der bevorzugten Ausführungsform der Sicherungsvorrichtung mit zwei Entriegelungsöffnungen weist das Entriegelungswerkzeug entsprechend zwei beispielsweise symmetrisch angeordnete Entriegelungsfortsätze auf.

Ein ebenfalls zur Erfindung gehörendes Steckverbindungssystem weist nebst einer Steckbuchse der beschriebenen Art auch eine vor der Buchse befestigte Sicherungsvorrichtung auf.

Nachfolgend wird ein Ausführungsbeispiel der Erfindung anhand von Figuren im Detail beschrieben. In den Figuren bezeichnen gleiche Bezugszeichen gleiche oder analoge Elemente. Es zeigen:
- Figur 1 eine Ansicht einer RJ45-Buchse in einem Panel mit einer Vielzahl von Stecköffnungen;
- Figur 2 eine Ansicht einer Sicherungsvorrichtung;
- Figur 3 eine Explosionsdarstellung des Panels mit einer Sicherungsvorrichtung;
- Figur 4 eine Ansicht der angeschnitten gezeichneten Sicherungsvorrichtung, die an einem Panel mit einer Steckbuchse befestigt ist;
- Figur 5 eine Ansicht eines Panels mit Sicherungsvorrichtung und RJ45-Stecker;
- Figur 6 eine Ansicht gemäss Figur 5 mit eingeführtem Stecker;
- Figuren 7a-7d Darstellungen der angeschnitten gezeichneten Anordnung von Steckbuchse mit Sicherungsvorrichtung und Stecker, die schrittweise das Einführen des Steckers in die Steckbuchse illustrieren;
- Figur 8 eine Ansicht eines Entriegelungswerkzeugs zum Zusammenwirken mit der Sicherungsvorrichtung; und
- Figuren 9a-9c Darstellungen der angeschnitten gezeichneten Anordnung von Steckbuchse mit Sicherungsvorrichtung, Stecker und Entriegelungswerkzeug, die das Entriegeln aufzeigen.

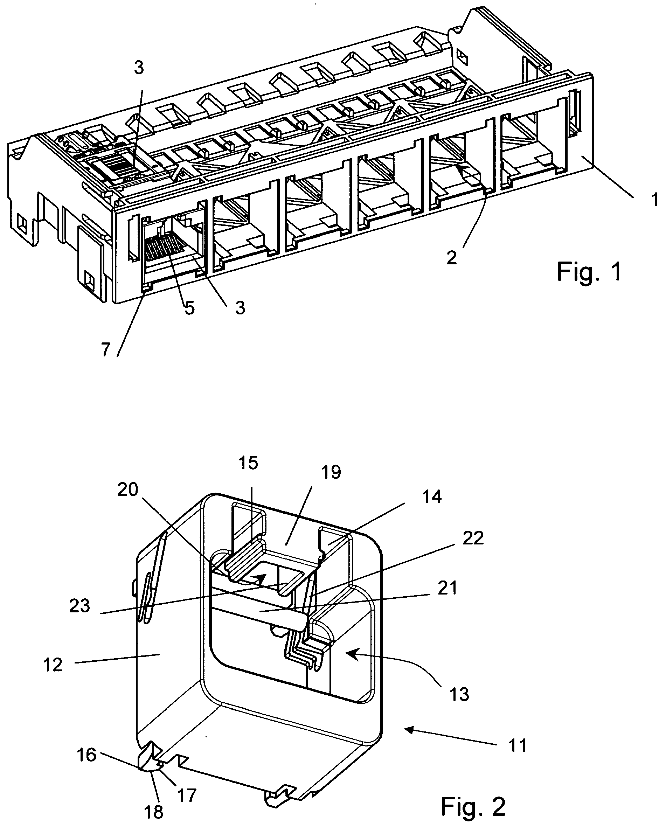

Das Panel 1 gemäss **Figur 1** ist in seinem Aufbau ähnlich zu an sich bekannten Steckpanels. Es weist eine Mehrzahl von Stecköffnungen 2 für elektrische Steckverbindungsbuchsen, hier RJ45-Buchsen 3 auf. In Fig. 1 ist nur eine solche Buchse 3 mit einer Mehrzahl von federnden Buchsenkontakten 5 - hier acht federnden Buchsenkontakten - eingezeichnet. Die Buchsen können gemäss dem Stand der Technik ausgebildet sein und werden hier nicht eingehender beschrieben. Im Unterschied zu bekannten Steckpanels sind die Stecköffnungen 2 für die Buchsen jedoch relativ nahe beieinander angeordnet. Ausserdem weisen die Stecköffnungen 2 Ausbuchtungen 7 auf, die der Befestigung von zusätzlichen Vorrichtungen vor der Buchse dienen können und die dadurch wie nachstehend noch etwas genauer beschrieben die Funktion von separaten Befestigungsöffnungen übernehmen, welch letztere aus dem Stand der Technik bekannt sind.

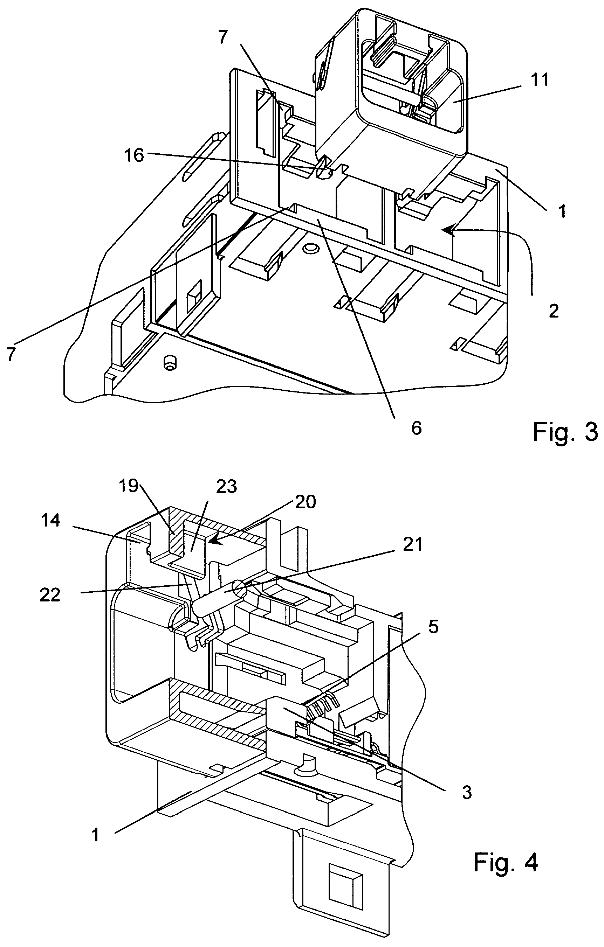

Die in **Figuren 2** **und** **3** dargestellte Sicherungsvorrichtung 11 weist ein Sicherungsvorrichtungsgehäuse 12 - beispielsweise aus Kunststoff auf. Dieses bildet eine Steckeröffnung 13 auf. In einem durch das Gehäuse gebildeten Inneren ist ein Betätigungselement, nämlich ein Betätigungsstift 21 bewegbar gelagert. In der dargestellten Ausführungsform geschieht dies mittels je einer an beiden lateralen Seiten vorhandenen Führungsnut 22, welche hier schräg verläuft und als Kulisse dient, in welcher ein in der Figur abgedeckter seitlicher Fortsatz des Betätigungsstifts geführt ist. Der Betätigungsstift kann ebenfalls aus einem Kunststoff oder alternativ aus Metall gefertigt sein, beispielsweise aus Stahl oder Aluminium.

Auf der in den Figuren 2&3 oberen Seite (der posterioren Seite) schliessen an die Steckeröffnung 13 zwei Entriegelungsöffnungen 14 an. In der dargestellten Ausführungsform ist ausserdem je ein entlang der axialen Richtung verlaufender kammartiger Vorsprung 15 vorhanden, welcher leicht in die Entriegelungsöffnungen hinein ragt. Zwischen den Entriegelungsöffnungen wird durch eine proximale Abdeckung 19 (bzw. Abdeckungspartie) und optionale Seitenwände 23 (an denen hier aussenseitig die kammartigen Vorsprünge 15 ausgebildet sind) eine Tasche 20 gebildet, deren Funktion nachstehend noch eingehender erörtert wird. Die Abdeckung und die Seitenwände sind hier einstückig mit dem Gehäuse 12 und gehören zu diesem. Auf der distalen Seite ist an jeder Ecke ein Befestigungsmittel 16 vorhanden. Dieses weist je eine Rastnase 17 aus, die nach innen - also in Richtung zur Achse - ragt und die beim Einführen der Sicherungsvorrichtung durch das Anstehen einer Rampe 18 an der Begrenzung der jeweiligen Ausbuchtung 7 gegen aussen abgelenkt wird und hinter der Frontplatte 6 des Panels 1 einrastet.

In Figur 3 sind der besseren Übersichtlichkeit halber nur das Panel 1 und die Sicherungsvorrichtung 11 ohne die Buchse dargestellt.

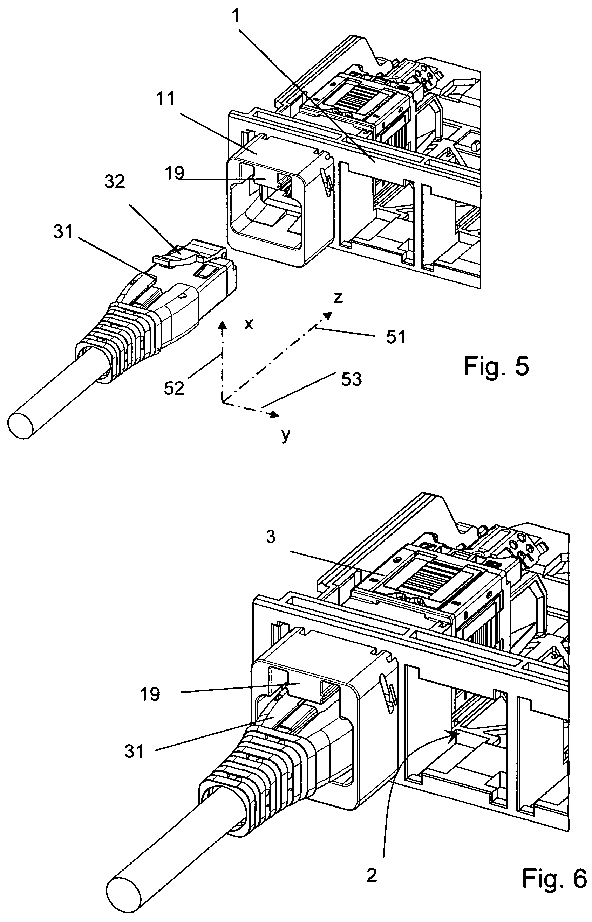

**Figuren 4-6** und auch die nachfolgenden Figuren zeigen die Sicherungsvorrichtung 11 an ihrer bestimmungsgemässen Position, mittels der Befestigungsmittel vor der Buchse 3 am Panel 1 befestigt. In Figuren 5 und 6 sieht man ausserdem einen normgemässen RJ45-Stecker 31 der bekannten Art mit einer Rastklinke. In Figur 5 ist der Stecker ausserhalb der Buchse dargestellt. Mit der Nummer 51 ist in Figur 5 Stecker- und Buchsenachse bezeichnet, wobei der Pfeil in die distale Richtung zeigt. Die Nummer 52 bezeichnet die in diesem Text mit anterior/posterior bezeichnete Achse, wobei der Pfeil in die posteriore Richtung (in der Figur oben, entsprechend der Position der Rastklinke 32 am Stecker 31) zeigt. Die Steckerkontakte sind also am Stecker gemäss der hier verwendeten Terminologie anterior vorhanden. Nummer 53 bezeichnet laterale Richtungen; sowohl die Richtung des Pfeils 53 als auch die entgegengesetzte Richtung werden hier mit "lateral" bezeichnet.

Figur 6 zeigt den Stecker, wie er bestimmungsgemäss in die Buchse eingesteckt ist. Deutlich sichtbar ist, dass die Rastklinke 32 in dieser Position von der Abdeckung 19 der Sicherungsvorrichtung 11 abgedeckt und für den Benutzer unzugänglich gemacht wird.

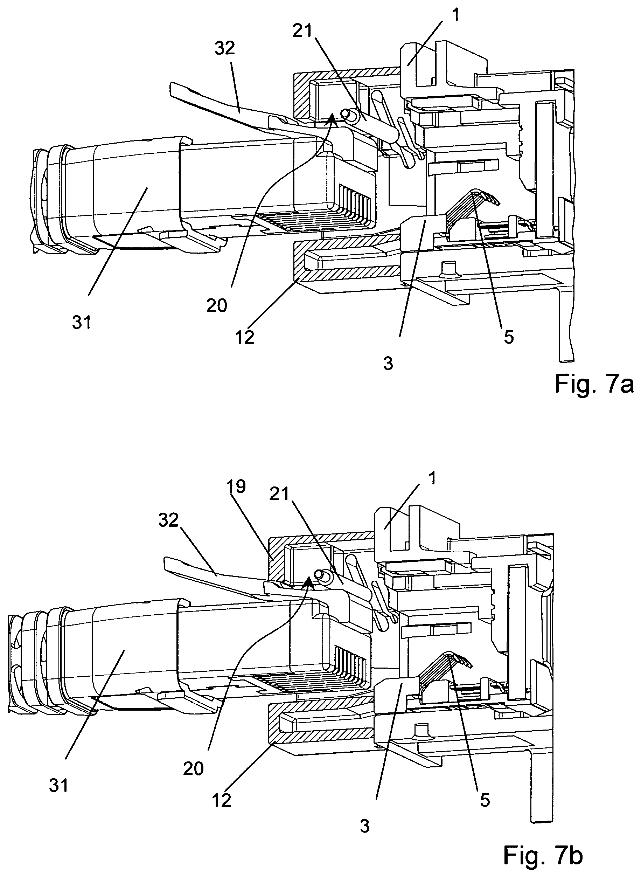

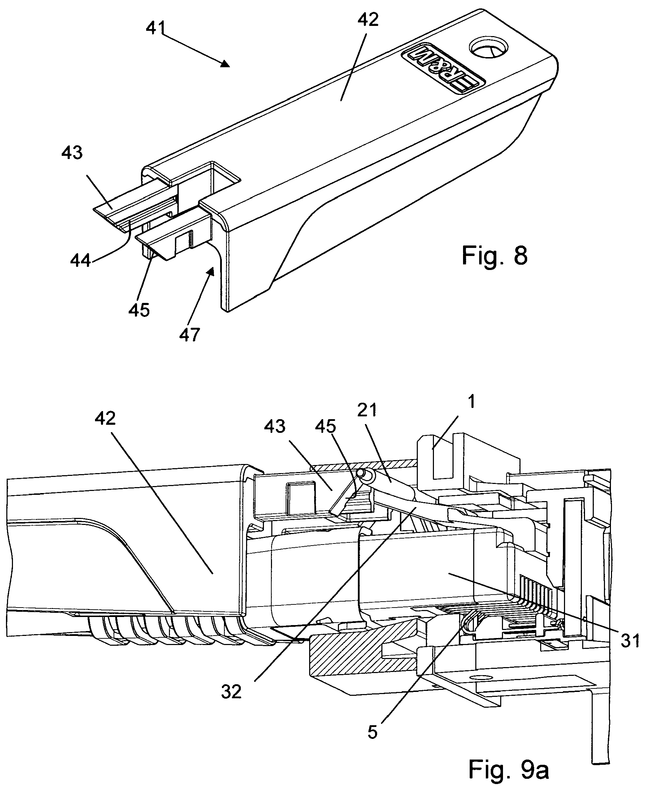

**Figuren 7a-7d** zeigen den Vorgang des Einsteckens Schritt für Schritt. In diesen Figuren sind wie auch in Figuren 9a-9c das Gehäuse der Sicherungsvorrichtung, das Panel und die Buchse teilweise geschnitten gezeichnet, während der Betätigungsstift 21 und der Stecker 31 nicht geschnitten dargestellt sind.

Figur 7a zeigt den Stecker vor der Buchse. Der Betätigungsstift kann sich in einer beliebigen Position innerhalb seines durch die Führung definierten Bewegungsraums befinden; in der dargestellten Ausführungsform ist er aufgrund der Schwerkraft am unteren Ende; bei einem umgekehrten Einbau kann er sich am entgegengesetzten Ende, in anderen Konfigurationen auch irgendwo dazwischen befinden.

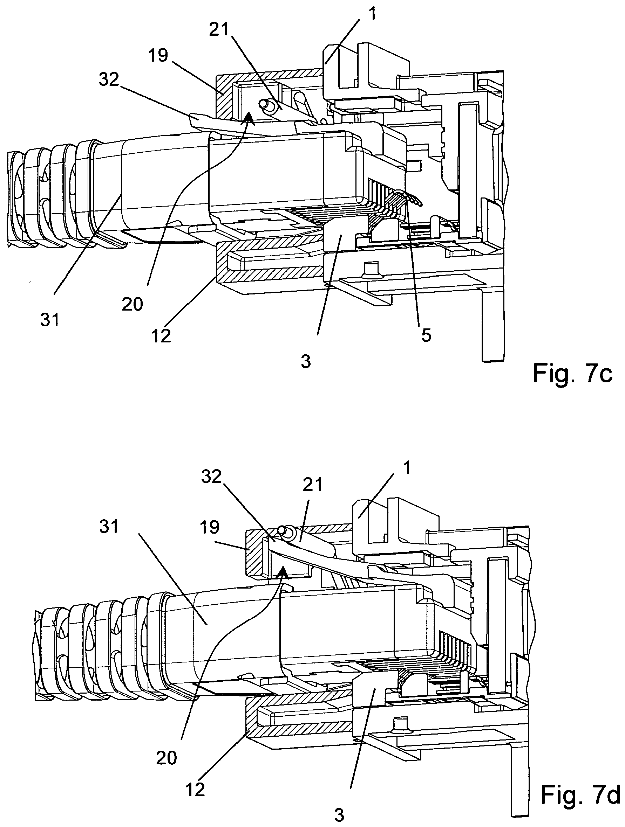

Wie in Figuren 7b und 7c ersichtlich wird die Rastklinke 32 bei der Bewegung des Steckers in die Buchse hinein durch die Abdeckung 19 der Sicherungsvorrichtung nach unten, d.h. anterior, zur Steckerachse hin ausgelenkt. Der Betätigungsstift 21 kann leicht nach oben verschoben werden; auch während des Einführens des Steckers spielt die Position des Betätigungsstifts keine Rolle.

In der Position gemäss Figur 7d ist der Stecker vollständig eingesteckt. In dieser Position drücken die federnden Buchsenkontakte 5 auf die entsprechenden Steckerkontakte, und die Rastklinke ist mit den Rastmitteln der Buchse (nicht gezeichnet) in an sich bekannter Art verrastet. Die geometrischen Dimensionen der Sicherungsvorrichtung 11 sind nun so, dass sich die Rastklinke in dieser Position ganz hinter der Abdeckung befindet. Aufgrund ihrer Federkraft ist sie dabei nach oben - also von der Steckerachse weg - ausgelenkt, und sie hält den Betätigungsstift 21 in einer entsprechenden, von der Steckerachse entfernten Position. Die Anordnung der Buchsenkontakte und der entsprechenden Steckerkontakte entspricht hier dem Steckertyp RJ45; bei anderen Steckertypen ist sie davon verschieden; bspw. beim GG45-Steckverbinder liegen 4 Steckkontakte sowie 4 (zusätzliche) Buchsenkontakte auf der gegenüberliegenden Seite (posterior).

In der Position gemäss Figur 7d befindet sich der hintere, proximale Teil der Rastklinke in der Tasche 20. Dadurch, dass die Rastklinke aufgrund ihrer Federkraft hinter die Abdeckung 19 ausgelenkt wird, ergibt sich ein zusätzlicher Ausziehschutz, der zum eigentlichen, normalen Rastmechanismus mit der Buchse hinzukommt - die Rastklinke verrastet quasi auch hinter der Abdeckung 19. Dieser zusätzliche Ausziehschutz ist jedoch im Allgemeinen nicht wesentlich für die Funktion der erfindungsgemässen Sicherungsvorrichtung. Vielmehr besteht die Wirkung der Sicherungsvorrichtung zunächst primär darin, dass die bestimmungs- und normgemäss verrastete Rastklinke für den Benutzer nicht zugänglich ist und folglich nicht werkzeugfrei betätigt werden kann.

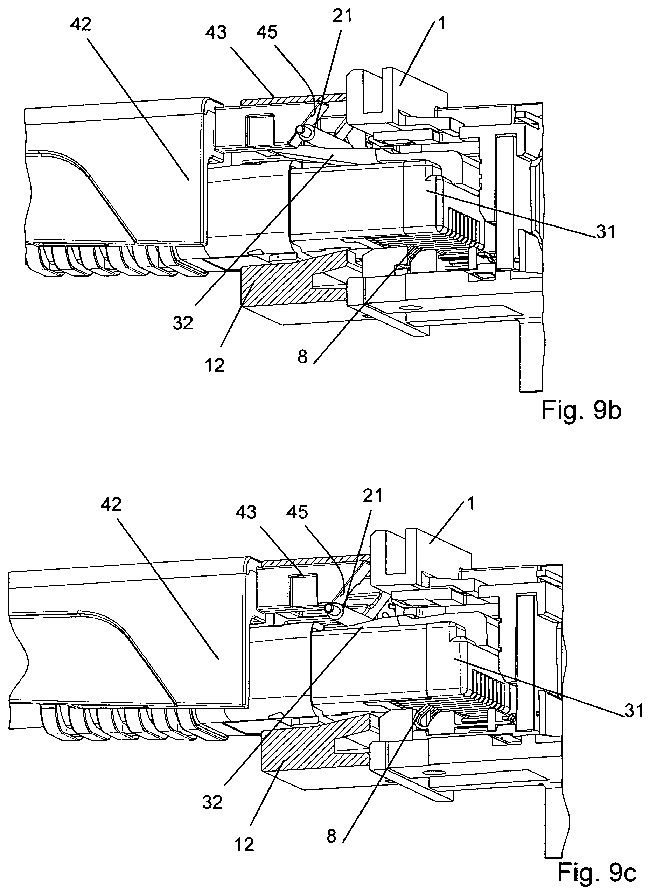

**Figur 8** zeigt eine Ansicht eines Entriegelungswerkzeugs 41, welches zum Lösen der Steckverbindung dient. **Figuren 9a bis 9c** zeigen schrittweise den Entriegelungsvorgang, der mit Hilfe des Entriegelungswerkzeugs durchgeführt wird. Das Entriegelungswerkzeug weist eine das Steckerteil oberseitig teilweise umgreifenden Handgriffspartie 42 und zwei distal von dieser weg ragende Entriegelungsfortsätze 43 auf. Diese sind in ihrer Querschnittsform (mit einer Nut 44, in welche der kammartige Vorsprung 15 eingreift) und Position auf die Entriegelungsöffnungen 14 abgestimmt. Die Entriegelungsfortsätze 43 weisen je eine rampenartige, d.h. in einem Winkel zur x-y-Ebene stehende Endfläche 45 auf. Dadurch, und auch aufgrund der Lage (Schräge) der Führungsnut 22 steht die Endfläche insbesondere in einem Winkel zur Bewegungsrichtung des Betätigungsstifts 21, und zwar so, dass dieser beim Einführen der Entriegelungsfortsätze 43 durch diese sukzessive zur Steckerachse hin - in den Figuren nach unten - ausgelenkt wird. Dies ist in Figuren 9b und 9c besonders gut zu sehen. Dadurch wird auch die zwischen den Entriegelungsfortsätzen liegende Rastklinke 32 durch den Betätigungsstift 21 nach unten ausgelenkt, bis wie in Figur 9c dargestellt die Rastverbindung gelöst ist, das distale Ende der Rastklinke unter der Abdeckung 19 liegt, d.h. von dieser freigegeben wird, und der Stecker gezogen werden kann. Dies geschieht praktischerweise zusammen mit dem Entriegelungswerkzeug 41, in dessen halboffener Kammer 47 der Stecker 31 eingebettet ist.

Die Ausführungsform mit zwei Entriegelungsfortsätzen und einem stiftartigen Betätigungselement ist besonders vorteilhaft, weil die Führung des Betätigungselements so eingerichtet werden kann, dass der Betätigungsstift die Rastklinke nur auslöst, wenn er beidseitig von je einem Entriegelungsfortsatz nach unten gedrückt wird; das einseitige Einführen nur eines Entriegelungswerkzeugs in eine Entriegelungsöffnung führt hingegen nicht zu einer gewaltfreien Entriegelung. Das verringert die Gefahr, dass aufgrund von nachlässiger Handhabung die Steckerverbindung unsachgemäss mit einem nicht dafür bestimmten Werkzeug gelöst wird. In alternativen Ausführungsformen, ist jedoch auch möglich, nur eine Entriegelungsöffnung und ein Entriegelungswerkzeug mit nur einem Entriegelungsfortsatz vorzusehen.

Das Betätigungselement kann in anderen Ausführungsformen als der dargestellten auch andere Formen als eine Stiftform aufweisen. Zum Beispiel kann es als am Gehäuse angeformtes oder von diesem separates, dort einseitig schwenkbar befestigtes Flügelelement vorhanden sein, wobei die Bewegungsrichtung des Betätigungselements dann durch eine Befestigungs- und Drehachse vorgegeben wird.

## Patentansprüche

1. Elektrisches oder optisches Steckverbindungssystem mit einem Steckerteil (31) und einer Steckbuchse (3), wobei die Steckbuchse (3) eine Steckeröffnung (2) bildet, in welche das Steckerteil (31) so einführbar ist, dass ein federndes Rastmittel (32) das Steckerteil (31) gegen ein Herausziehen aus der Steckeröffnung (2) verriegelt, und wobei in die Steckbuchse (3) das Steckerteil (31) so einführbar ist, dass das federnde Rastmittel (32) eine Rastverbindung bewirkt, die das Steckerteil (31) mit der Steckeröffnung verrastet, aufweisend eine vor der Steckbuchse (3) befestigbare Sicherungsvorrichtung (11), wobei die Sicherungsvorrichtung ein Gehäuse (12) aufweist, vor der Steckbuchse (3) befestigbar und so ausgeführt ist, dass sie das federnde Rastmittel (32) für eine manuelle Betätigung unzugänglich macht, und mindestens eine Entriegelungsöffnung (14) im Gehäuse (12) umfasst, durch welche bei gestecktem Steckerteil (31) ein Entriegelungsfortsatz (43) eines Entriegelungswerkzeugs (41) durch eine axiale Bewegung in die Sicherungsvorrichtung (11) einführbar ist und durch diese axiale Bewegung die Rastverbindung löst, und ein Betätigungselement (21) aufweist, welches relativ zum Gehäuse (12) bewegbar ist, wobei das Betätigungselement (21) so angeordnet ist, dass bei gestecktem Steckerteil (31) das Betätigungselement (21) durch das Einführen des mindestens einen Entriegelungsfortsatzes (43) so bewegt wird, dass das Betätigungselement (21) gegen das Rastmittel (32) gedrückt wird und dieses entgegen einer Federkraft auslenkt, **dadurch gekennzeichnet, dass** die Sicherungsvorrichtung (11) an der Steckbuchse (3) selbst oder an einem die Steckbuchse (3) aufnehmenden Steckpanel (1) zu befestigen ist, wobei zur Befestigung der Sicherungsvorrichtung (11) am Steckanel (1) um die Stecköffnung (2) herum gruppierten separaten Löcher Rastlaschen aufnehmen, mit denen die Sicherungsvorrichtung (11) aufgeklippt wird, oder die Stecköffnung (2) des Steckpanels (1) für die Steckbuchsen (3) Ausbuchtungen (7) für die Ratlaschen hat, sodass die Stecköffnung (2) selbst die Rastlaschen aufnehmen wird.

2. Steckverbindungssystem nach Anspruch 1, **dadurch gekennzeichnet, dass** die Sicherungsvorrichtung mindestens zwei Entriegelungsöffnungen (14) aufweist, die beidseitig einer Ebene durch eine Steckerachse angeordnet sind.

3. Steckverbindungssystem nach Anspruch 2, **dadurch gekennzeichnet, dass** das Auslenken des Rastmittels (32) durch das Betätigungselement (21) in eine ausgeklinkte Position das Einführen je eines Entriegelungsfortsatzes (43) in beide Entriegelungsöffnungen (14) voraussetzt.

4. Steckverbindungssystem nach einem der vorangehenden Ansprüche, **dadurch gekennzeichnet, dass** das Betätigungselement (21) durch eine Führung geführt in einer Bewegungsrichtung bewegbar ist.

5. Steckverbindungssystem nach einem der vorangehenden Ansprüche, **dadurch gekennzeichnet, dass** das Betätigungselement (21) ein Betätigungsstift ist, der beidseitig je durch eine Führungsnut (22) geführt wird.

6. Steckverbindungssystem nach einem der vorangehenden Ansprüche, **gekennzeichnet durch** eine **durch** das Gehäuse (12) gebildete Tasche (20), in welcher bei gestecktem Steckerteil (31) alle aus der Steckeröffnung herausragende Partien des Rastmittels (32) gelagert und vor direktem Zugriff geschützt sind.

7. Steckverbindungssystem nach einem der vorangehenden Ansprüche, aufweisend ein Entriegelungswerkzeug (41) mit mindestens einem Entriegelungsfortsatz (43), der an die mindestens eine Entriegelungsöffnung (14) angepasst ist.

8. Steckverbindungssystem nach Anspruch 7 , **dadurch gekennzeichnet, dass** das Betätigungselement (21) geführt bewegbar ist, und der Entriegelungsfortsatz (43) eine distale Endfläche aufweist, welche in einem von 90° verschiedenen Winkel zur Bewegungsrichtung des Betätigungselements (21) steht.

## Claims

1. Electrical or optical plug connection system, with a plug part (31) and a plug socket (3), the plug socket (3) forming a plug opening (2) into which the plug part (31) can be introduced in such a way that a resilient latch means (32) locks the plug part (31) against being pulled out of the plug opening (2), and the plug part (31) being introducible into the plug socket (3) in such a way that the resilient latching means (32) effects a latch connection latching the plug part (31) with the plug opening, the plug connection system comprising a safety device (11) which is fixable in front of the plug socket (3), wherein the safety device comprises a housing (12), is fixable in front of the plug socket (3), and is implemented in such a way that it renders the resilient latching means (32) inaccessible to manual actuation, and comprises at least one unlocking opening (14) in the housing (12), through which, with the plug part (31) plugged in, an unlocking protrusion (43) of an unlocking tool (41) can be introduced into the safety device (11) via an axial movement, releasing the latch connection by said axial movement, and comprises an actuation element (21), which is moveable with respect to the housing (12), the actuation element (21) being arranged in such a way that, with the plug part (31) plugged in, the actuation element (21) is moved via introduction of the at least one unlocking protrusion (43) in such a way that the actuation element (21) is pressed against the latching means (32) deflecting it counter to a spring force, **characterised in that** the safety device (11) is mountable at the plug socket (3) itself or at a patch panel (1) receiving the plug socket (3), wherein, for fastening the safety device (11) to the patch panel (1), separate perforations, which are grouped around the plug opening (2), receive latch lugs by means of which the safety device (11) is clipped on, or the plug opening (2) of the patch panel (1) for the plug sockets (3) has recesses (7) for the latch lugs, thus allowing the plug opening (2) itself to receive the latch lugs.

2. Plug connection system according to claim 1, **characterised in that** the safety device comprises at least two unlocking openings (14), which are arranged on both sides of a plane through a plug axis.

3. Plug connection system according to claim 2, **characterised in that** the deflection of the latching means (32) into an unlatched position by means of the actuation element (21) requires respectively one unlocking protrusion (43) being introduced into both unlocking openings (14).

4. Plug connection system according to one of the preceding claims, **characterised in that** the actuation element (21) is movable in such a way that it is guided in a movement direction by way of a guidance.

5. Plug connection system according to one of the preceding claims, **characterised in that** the actuation element (21) is an actuation pin, which is guided by way of a guiding groove (22) on both sides.

6. Plug connection system according to one of the preceding claims, **characterised by** a pocket (20) formed by the housing (12), in which, with the plug part (31) plugged in, all portions of the latching means (32) projecting from the plug opening are supported and are protected from direct access.

7. Plug connection system according to one of the preceding claims, comprising an unlocking tool (41) with at least one unlocking protrusion (43) which is adapted to the at least one unlocking opening (14).

8. Plug connection system according to claim 7, **characterised in that** the actuation element (21) is guidedly movable, and the unlocking protrusion (43) comprises a distal end surface, which is oriented in an angle that differs from 90° with respect to the movement direction of the actuation element (21).

## Revendications

1. Système de connexion à fiche électrique ou optique avec une pièce de fiche (31) et une prise femelle (3), la prise femelle (3) formant une aperture à fiche (2), dans laquelle la pièce de fiche (31) peut être introduite de telle manière qu'un moyen d'encliquetage (32) élastique verrouille la pièce de fiche (31) contre être tirée de l'aperture à fiche (2) ; et la pièce de fiche (31) étant introduisible dans la prise femelle (3) de telle manière que le moyen d'encliquetage (32) élastique effectue une connexion d'encliquetage encliquetant la pièce de fiche (31) avec l'aperture à fiche ; le système de connexion à fiche comprenant un dispositif de sécurité (11) fixable devant la prise femelle (3), le dispositif de sécurité comportant un boîtier (12), étant fixable devant la prise femelle (3) et étant implémenté de telle façon qu'il rend le moyen d'encliquetage (32) élastique inaccessible pour une mise en marche manuelle, et comportant au moins une aperture de déverrouillage (14) dans le boîtier (12), à travers de laquelle, si la pièce de fiche (31) est fichée, une saillie de déverrouillage (43) d'un outil de déverrouillage (41) peut être introduite dans le dispositif de sécurité (11) par un mouvement axial, la saillie de déverrouillage (43) dégageant la connexion d'encliquetage par ce mouvement axial ; et comporte un élément d'actuation (21) mouvable relativement au boîtier (12), l'élément d'actuation (21) étant disposé de telle manière que, si la pièce de fiche (31) est fichée, l'élément d'actuation (21) est mû par l'introduction de l'au moins une saillie de déverrouillage (43) de telle façon que l'élément d'actuation (21) est pressé contre le moyen d'encliquetage (32) le défléchissant contre une force de ressort,
**caractérisé en ce que** le dispositif de sécurité (11) est à fixer à la prise femelle (3) elle-même ou à une paroi porte-connecteurs (1) recevant la prise femelle (3), soit que, pour le but de fixer le dispositif de sécurité (11) à la paroi porte-connecteurs (1), des perforations séparées, groupées autour de l'aperture à fiche (2), reçoivent des languettes d'encliquetage, par le biais desquelles le dispositif de sécurité (11) est clippé, soit que l'aperture à fiche (2) aie des échancrures (7) pour les languettes d'encliquetage ainsi que l'aperture à fiche (2) reçoive les languettes d'encliquetage elle-même.

2. Système de connexion à fiche selon la revendication 1, **caractérisé en ce que** le dispositif de sécurité comporte au moins deux apertures de déverrouillage (14) disposées de deux côtés d'un plan s'étendant à travers d'un arbre de fiche.

3. Système de connexion à fiche selon la revendication 2, **caractérisé en ce que** le défléchissement du moyen d'encliquetage (32) dans une position déclenchée par la voie de l'élément d'actuation (21) requière l'introduction d'une respective saillie de déverrouillage (43) dans chacune des deux apertures de déverrouillage (14).

4. Système de connexion à fiche selon l'une quelconque des revendications précédentes, **caractérisé en ce que** l'élément d'actuation (21) peut être mû dans une direction de mouvement guidé par une guidance.

5. Système de connexion à fiche selon l'une quelconque des revendications précédentes, **caractérisé en ce que** l'élément d'actuation (21) est une broche d'actuation guidée de deux côtés par une rainure de guidance (22).

6. Système de connexion à fiche selon l'une quelconque des revendications précédentes, **caractérisé par** une poche (20) formée par le boîtier (12), dans laquelle, si la pièce de fiche (31) est fichée, toutes les parties du moyen d'encliquetage (32) en saillie de l'aperture à fiche sont supportées et protégées d'accès direct.

7. Système de connexion à fiche selon l'une quelconque des revendications précédentes, comprenant un instrument de déverrouillage (41) avec au moins une saillie de déverrouillage (43) adaptée à l'au moins une aperture de déverrouillage (14).

8. Système de connexion à fiche selon la revendication 7, **caractérisé en ce que** l'élément d'actuation (21) est mouvable guidé, et que la saillie de déverrouillage (43) comporte une surface de finissage distale, laquelle inclût un angle différent de 90° avec la direction de mouvement de l'élément d'actuation (21).
